# Europäisches Patentamt

## European Patent Office

## Office européen des brevets

(19)

(11) Veröffentlichungsnummer: **0 206 357**
A2

(12)

# EUROPÄISCHE PATENTANMELDUNG

(21) Anmeldenummer: **86108847.4**

(51) Int. Cl.⁴: **F 02 B 47/00**

(22) Anmeldetag: **28.06.86**

(30) Priorität: **28.06.85 DE 3523094**

(43) Veröffentlichungstag der Anmeldung: **30.12.86**
**Patentblatt 86/52**

(84) Benannte Vertragsstaaten: **CH FR GB IT LI SE**

(71) Anmelder: **Daimler Benz Aktiengesellschaft,**
**Postfach 600202 Mercedesstrasse 136,**
**D-7000 Stuttgart 60 (DE)**

(72) Erfinder: **Porth, Dieter, Dipl.-Ing., Im Wolfsgalgen 18,**
**D-7141 Schwieberdingen (DE)**
Erfinder: **Scholz, Helmut, An der Ziegelei 14,**
**D-7551 Bischweier (DE)**
Erfinder: **Unser, Karl-Heinz, Am Hohenrain 14,**
**D-7553 Muggensturm (DE)**
Erfinder: **Hofer, Hermann, Dipl.-Ing., Goethestrasse 27,**
**D-7560 Gaggenau (DE)**

(54) **Druckluftanlage für Nutzfahrzeuge.**

(57) Bei einer Druckluftanlage (23) für Nutzfahrzeuge, die über einen Verbrennungsmotor (22) angetrieben werden, werden die Abluftausgänge (a) der Druckluftaggregate (11, 13, 14, 15, 18, 19) auf die Saugleitung (33) des Verbrennungsmotores (22) geführt, so dass Abblasgeräusche der Druckluftaggregate vermieden werden und in der Abluft enthaltenes Öl nachfolgend im Motor verbrannt wird.

0 206 357

Daimler-Benz Aktiengesellschaft   *1*   Daim 16 241A/E
S t u t t g a r t                        26. Juni 1986
                                         EPT wi-re

Druckluftanlage für Nutzfahrzeuge

Die Erfindung betrifft eine Druckluftanlage für Nutzfahrzeuge,
die über einen Verbrennungsmotor angetrieben sind, der über eine
Saugleitung mit Frischluft versorgt wird, und bei denen die
Druckluftanlage mindestens ein Druckluftaggregat aufweist,
das mit einem der Entlüftung dienenden Abluftausgang versehen
ist, und mit Mitteln zur Dämpfung der durch die Abluft verursachten Ausströmgeräusche.

Bei solchen Druckluftanlagen werden Verbraucher, wie Arbeitszylinder, über Steuerventile be- und entlüftet. Die Steuerdrücke
werden von Druckreglern eingestellt, die zur Aufrechterhaltung
von Konstantdrücken von Zeit zu Zeit entlüften. Beim Entlüften
dieser Druckluftaggregate entstehen durch die ausströmende Abluft zum Teil erhebliche Geräusche.

Zur Dämpfung dieser Geräusche sind bei einer bekannten Druckluftanlage geräuschdämpfende Mittel vorgesehen, die als Schalldämpfer an den einzelnen Druckluftaggregaten angeordnet sind.
Diese Schalldämpfer verlangsamen die Strömungsgeschwindigkeit
der Abluft und vermindern damit die Geräuschentwicklung, erhöhen aber den Staudruck im Druckluftaggregat und bewirken eine
Verlängerung der Entlüftungszeiten, die mitunter über den gesetzlich vorgeschriebenen Werten liegen. Außerdem wird durch
den in der Abluft immer vorhandenen Ölnebel die Umwelt verschmutzt.

Für Schalldämpfer an Luftauslässen von Druckluftaggregaten ist
es deshalb auch schon bekannt, diese mit einer Ölabscheidevorrichtung zu kombinieren (DE-OS 30 01 486).

Der Erfindung liegt die Aufgabe zugrunde, bei einer Druckluftanlage der eingangs genannten Art die geräuschdämpfenden Mittel
so auszugestalten, daß eine den gesetzlichen Vorschriften entsprechende Geräuschdämpfung bei kurzen Entlüftungszeiten in Verbindung mit einer Vermeidung von Ölnebelausstoß erreicht wird,
und zwar ohne aufwendige Zusatzeinrichtungen.

Gemäß der Erfindung wird dies dadurch erreicht, daß der Abluftausgang des Druckluftaggregates auf die Saugleitung des Verbrennungsmotores ausmündet. Es nimmt somit bei der erfindungsgemäßen Lösung das stets vorhandene Frischluftversorgungssystem
die Abluft der Druckluftaggregate und damit auch den in Verbindung hiermit anfallenden Ölnebel auf. Die in Bezug auf den
Gesamtluftbedarf des Verbrennungsmotores geringe Abluftmenge
der Druckluftaggregate bleibt einerseits ohne Auswirkung auf
das Motorverhalten, auch bezüglich des Ölgehaltes der Abluft,
andererseits sind Blasgeräusche ins Freie ebenso wie eine wesentliche Verschmutzung durch das Öl vermieden, da dieses verbrannt wird. Wegen des großen Luftdurchsatzes des Motores ist
ferner ein Luftrückstau ausgeschlossen, so daß die spezifischen
Entlüftungsseiten der Druckluftaggregate nicht beeinträchtigt
werden.

In Ausgestaltung der Erfindung ist es von Vorteil, wenn bei mehreren Druckluftaggregaten deren Abluftausgänge über eine Sammelleitung an die Saugleitung angeschlossen werden.

Die erfindungsgemäße Nutzung des Saugsystems zugleich als Schalldämpfer und Entölvorrichtung für die Druckluftaggregate erweist sich wirtschaftlich als besonders günstig, da so auf zusätzliche und aufwendige gesonderte Schalldämpfer und/oder Entölvorrichtungen verzichtet werden kann.

Die Erfindung ist anhand von in der Zeichnung dargestellten Ausführungsbeispielen im folgenden näher beschrieben. Es zeigen:

Figur 1          ein Blockschaltbild einer Druckluftanlage für ein Nutzfahrzeug,

Figur 2          eine schematische Darstellung eines Verbrennungsmotors in der Verbindung mit der Druckluftanlage in Figur 1.

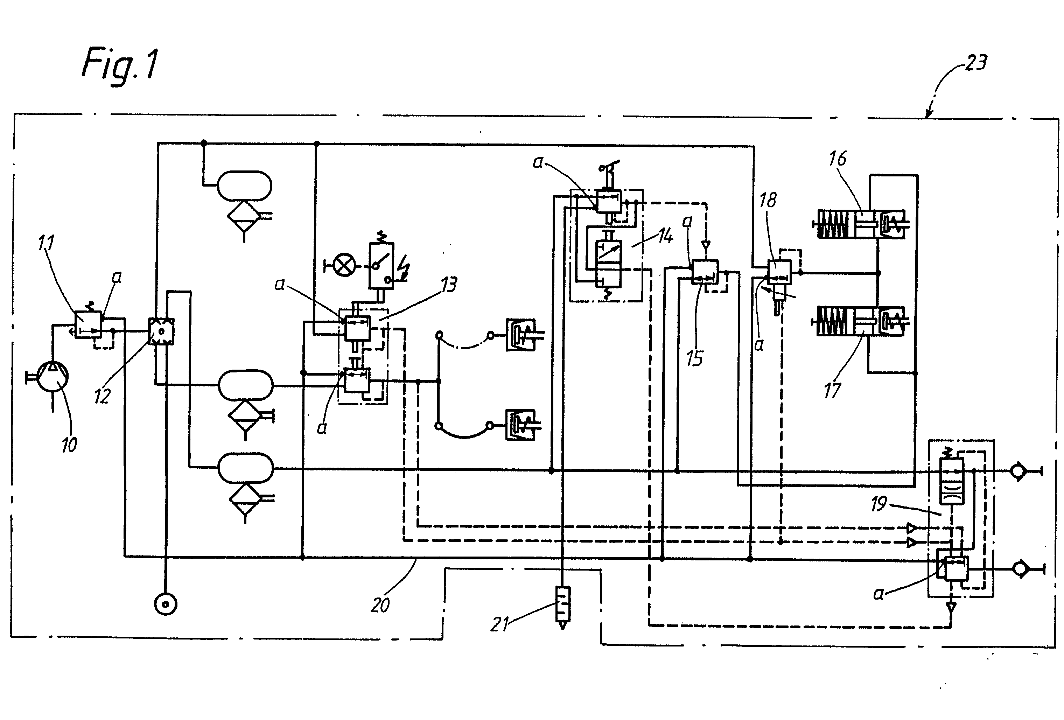

Die in Figur 1 im Schaltbild dargestellte Druckluftanlage 23 für ein Nutzfahrzeug weist eine Mehrzahl von Druckluftaggregaten auf, die jeweils einen der Entlüftung dienenden Abluftausgang a besitzen. Solche Druckluftaggregate sind ein einem Verdichter 10 nachgeschalteter Druckregler 11, der ausgangsseitig mit einem Schutzventil 12 verbunden ist, ein Zweikreis-Bremsventil 13 zur Steuerung der Bremszylinder, ein Handbremsventil 14, ein Relaisventil 15 für zwei Federspeicher 16, 17, ein Bremskraftregler-Relais 18 und ein Anhänger Steuerventil 19. Diese Druckluftaggregate sind in bekannter Weise in der in Figur 1 dargestellten Weise miteinander verbunden.

Die mit a jeweils bezeichneten Abluftausgänge der Druckluftaggregate 11, 13, 14, 15, 18, 19 sind an eine Sammelleitung
20 angeschlossen. Diese Sammelleitung 20 sollte auf einen
möglichst großvolumigen Schalldämpfer 21, in welchem eine Entölvorrichtung, z.B. ein Ölfilter oder Ölabscheider mit Ölsammler
integriert ist, ausmünden, um Geräuschbelästigungen durch die
abströmende Abluft und Verunreinigungen der Umwelt durch in der
Abluft enthaltenes Öl zu vermeiden.

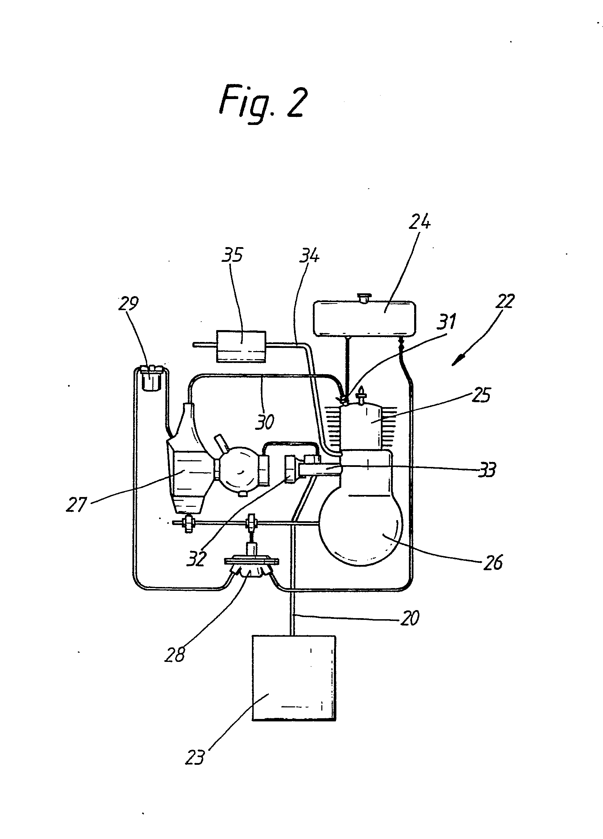

Im Rahmen der Erfindung wird der gleiche Effekt in Verbindung mit
dem Verbrennungsmotor 22 eines Nutzfahrzeuges unter Vermeidung
eines gesonderten Schalldämpfers, wie in Fig. 2 geschildert, erreicht.

Von dem schematisch gezeigten Verbrennungsmotor 22 sind der Kraftstoffbehälter mit 24, der Motorblock mit 25, das Kurbelgehäuse
mit 26 und die Einspritzpumpe mit 27 bezeichnet. Der Kraftstoff
wird mittels einer Kraftstofförderpumpe 28 über ein Kraftstofffilter 29 zu der Einspritzpumpe 27 gefördert. Eine Einspritzleitung 30 führt von dieser zu der Einspritzdüse 31 im Zylinder
des Motorblockes 25. Verbrennungsluft wird über eine mit einem
Luftfilter 32 abgeschlossene Saugleitung 33 angesaugt, während
die Verbrennungsgase über das Abgassystem mit der Abgasleitung
34 und dem Auspufftopf 35 in die Atmosphäre abgeführt werden.
Die Sammelleitung 20 der Druckluftanlage 23 ist unmittelbar an
die Saugleitung 33 angeschlossen, von der die Abluftvolumina
der Druckluftaggregate 11, 13, 14, 15, 18, 19 in Figur 1 aufgenommen und dem Motor zur Verbrennung zugeführt werden.

Bei der beschriebenen Druckluftanlage ist es nicht zwingend, daß
alle Druckluftaggregate an die Sammelleitung 20 angeschlossen
werden. In vielen Fällen genügt es zu einer ausreichenden Geräuschdämpfung, nur solche Druckluftaggregate anzuschließen, die
ein vorgegebenes Mindest-Abluftvolumen entlüften.

Daimler-Benz Aktiengesellschaft        *1*        Daim 16 241A/E

S t u t t g a r t                                 26. Juni 1986

                                                  EPT wi-re


Neue Ansprüche


1. Druckluftanlage für Nutzfahrzeuge, die über einen Verbrennungsmotor angetrieben sind, der über eine Saugleitung mit Frischluft
versorgt wird, und bei denen die Druckluftanlage mindestens ein
Druckluftaggregat aufweist, das mit einem der Entlüftung dienenden Abluftausgang versehen ist, und mit Mitteln zur Dämpfung der
durch Abluft verursachten Ausströmgeräusche,
d a d u r c h   g e k e n n z e i c h n e t ,
daß der Abluftausgang (a) des Druckluftaggregates (11, 13, 14,
15, 18, 19) auf die Saugleitung (33) des Verbrennungsmotores (22)
ausmündet.


2. Druckluftanlage nach Anspruch 1,
d a d u r c h   g e k e n n z e i c h n e t ,
daß die Abluftausgänge (a) mehrerer Druckluftaggregate (11, 13,
14, 15, 18, 19) über eine Sammelleitung (20) an die Saugleitung
angeschlossen sind.

**Fig.1**

0 206 357

# Fig. 2